## Europäisches Patentamt
## European Patent Office
## Office européen des brevets

(19)

(11) Publication number: **0 052 105**
**B1**

(12)                    EUROPEAN PATENT SPECIFICATION

(45) Date of publication of patent specification: **07.11.84**  (51) Int. Cl.³: **A 01 C 23/04**

(21) Application number: **81900428.4**

(22) Date of filing: **20.02.81**

(88) International application number:
**PCT/AU81/00021**

(87) International publication number:
**WO 81/02376 03.09.81 Gazette 81/21**

(54) **MIXING DEVICE FOR WATERING SYSTEMS.**

(30) Priority: **21.02.80 AU 2478/80**

(43) Date of publication of application:
**26.05.82 Bulletin 82/21**

(45) Publication of the grant of the patent:
**07.11.84 Bulletin 84/45**

(84) Designated Contracting States:
**DE FR GB NL SE**

(56) References cited:
**AU-D-3 313 578**
**DE-C- 248 486**
**FR-A-1 375 881**
**GB-A- 192 509**
**US-A-1 611 406**
**US-A-2 044 821**
**US-A-2 758 877**

(73) Proprietor: **TEMPLE, Philip Frank**
**17 Myilly Terrace**
**Darwin, N.T. 5794 (AU)**

(72) Inventor: **TEMPLE, Philip Frank**
**17 Myilly Terrace**
**Darwin, N.T. 5794 (AU)**

(74) Representative: **Warren, Keith Stanley et al**
**BARON & WARREN 18 South End Kensington**
**London W8 5BU (GB)**

Courier Press, Leamington Spa, England.

EP 0 052 105 B1

## Description

### Background Art

Soluble solid additives and concentrated liquid additives can be applied through devices which allow an additive solution to be distributed through a hose or spinkler system.

Mixing devices presently available are based either on the use of especially made fertilizer cartridges or tablets which dissolve slowly as the water flows around them or on a venturi action for additive solutions. The disadvantages of these devices are:—

(i) They are only capable of holding comparatively small quantities of fertilizer (about 200 grams);

(ii) They require the use of a specially manufactured cartridges or tablets of fertilizer;

(iii) Some devices are dependant for their operation on moving parts and these devices are prone to break down;

(iv) Some devices use a plurality of valves and these lead to eventual malfunction.

(v) Other devices are not self-draining or they do not have the provision to prevent particulate matter blocking the outlet nozzles etc. Examples of such devices are disclosed in specifications US—A—2 044 821, 2 758 877 and 1 611 406.

### Disclosure of Invention

The device of the invention is capable of overcoming the foregoing disadvantages. It is also capable of operating while attached to a tap or while in line on a hose. When not in use it may be left in situ attached to a tap or hose without effecting the water flow. Access to the device for recharging does not require disconnection of the device from the tap of hose. The device may have a non-return valve to prevent back flow and contamination of the water supply.

The present invention consists in a device for distributing soluble additives in a pressure watering system, said device comprising an outer pressure chamber and an inner permeable chamber for holding the additives, two paths for water flow between an inlet and an outlet, one path being a direct main flow path and the other path being into and through the inner chamber and out of the outer chamber, wherein the path through the inner chamber comprises an inlet hole between the upstream end of the main flow path and the inside of the inner chamber and an outlet hole between the inside of the outer chamber and the downstream end of the main flow path, characterised by a single regulating means situated near the outlet hole for adjusting both the flow through the main flow path and the flow through said outlet hole and also for adjusting the back pressure in the main flow path, said regulating means comprising a manually operated valve having a passage which can connect the main flow path to the outlet and an abutment which can close the outlet of the path through the inner chamber, the passage and the abutment being so relatively positioned that actuation of the valve controls the relative flow rates through the main path and the outlet progressively between a position where the outlet is blocked and the main flow path is unobstructed and a position where the outlet is open and said main path is blocked.

### Brief Description of Drawings

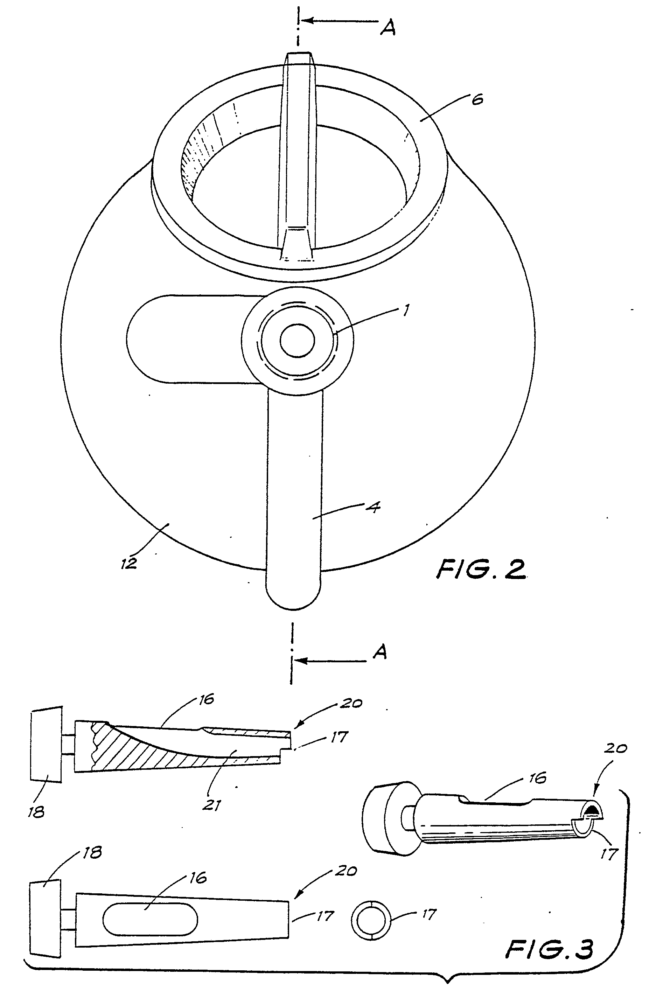

Fig. 1 is a cross-sectional view of the view A—A in Fig. 2,

Fig. 2 is a plan view of the device, and

Fig. 3 shows several view of a mixing valve.

### Best Mode of Carrying out the Invention

The mixing device consists of a pressure chamber 12 within which there is mounted a gauze or the like permeable container or chamber 7 having a smaller mesh size than the outlet hole 8 and the outlet holes of dripper nozzles etc. generally in use. The term permeable includes both membranes and gauzes and implies the inner chamber may be completely or partly permeable. The gauze container or inner chamber 7 holds the fertilizer and access to it for inserting additives may be gained through an opening 13 in or near the top of the chamber 12, which is sealed by a screw-on cap 6 or the like. The cap 6 may be fitted with a water-tight gasket. In a smaller version of the device, the chamber 12 has its water inlet 1, which is near the top of the chamber, mounted directly to the water tap by means of a threaded collar. In a larger version, the device is free standing and has its inlet 1 connected to the water supply by a short length of hose pipe or the like. In both versions the water outlet 9 may be at or near the bottom of the chamber.

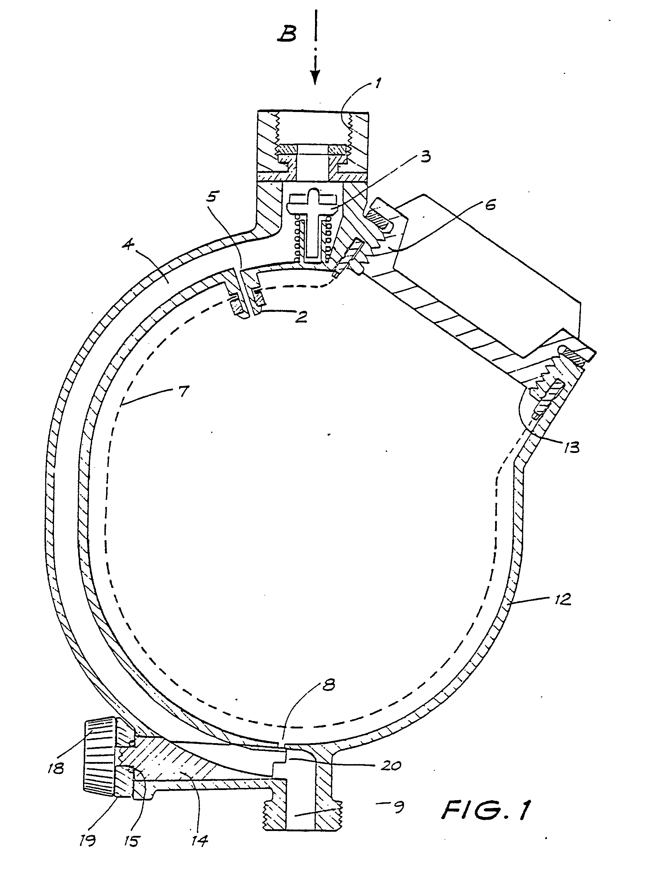

The inlet 1 and outlet 9 are directly connected together by the main flow path 4. As shown in Figure 1 the path 4 runs round the outside of the chamber 12 but it is not restricted to this configuration. The path 4 may run through the chamber 12 or be formed by a channel between the inner wall of the chamber 12 and an impermeable part of the wall of the inner chamber 7. The channel could be formed by flanges on the outer wall of the inner chamber.

In another embodiment the main flow path 4 is between the inner surface of the pressure chamber 12 and an impermeable wall part thereof outside the inner chamber 7, which path connects the inlet 1 to the outlets 8 and 9. The other path is through the inner chamber 7 and out through the permeable part of this chamber to mix with the water in the main flow path 4 along its length.

The inside cross-sectional area of this path 4 is about the same as that of the connecting hose or water pipe. However, about 2 or 3 cm from its beginning or upstream end, the inside cross-sectional area of the path is reduced and this reduction continues until about 2 or 3 cm from the end, at which point the inside cross-sectional area returns to normal.

On the upstream side of the point of reduction of inside cross-sectional area there is a hole 5, the cross-sectional area of which is the same as the reduction in area of the path. The hole passes from the path directly into the inner chamber 7 which holds the fertilizer. The hole can be so positioned so that incoming water causes a circular current in the spherical chamber. This helps solids to dissolve.

On the downstream side of the point where the inside cross-sectional area of the path returns to normal there is another hole 8 the same cross-sectional area as the first which provides access directly into the bottom of the pressure chamber 12 (but not into the gauze container). The position of this hole ensures complete draining of fertilizer etc from the chamber after each use and obviates the need for flushing.

A regulator means is incorporated to control the relative amount of water travelling through the container 12 to that travelling round the path 4 and hence regulating the strength of the fertilizer solution leaving the device. While the flow rate can be adjusted by the tap to which the device is connected, a further flow rate regulator is provided by the regulator means.

One such regulator means will be be described. A valve 14 is located where the outlet hole 8 from the chamber 12 meets the path 4. It has a tapered conical shape and has a hole 21 drilled up the centre from the narrow end, the same diameter as the path 4. The hole 21 is drilled at an angle so as to emerge from the side of the valve. Thus, water passing down the path 4 enters the side 16 of the valve and exits from the narrow end 17.

The narrow end of the valve 17 has a raised collar 20 extending approximately 2/3 of the way around. When the valve 14 is in one position the collar 20 blocks the outlet hole 8. When the valve 14 is turned to another position the outlet hole 8 is opened.

The opening 16 at the side of the valve and the collar 20 are so positioned with respect to one another that when the valve is turned to its extreme in one direction the full flow of water through the path 4 passes through the valve, while the outlet hole 8 is completely blocked. This position is used to retain liquid additives in the chambers. When turned to its extreme in the other direction the flow of water through the path is completely blocked while the outlet hole 8 is fully open. At intermediate positions the flow through the path 4 and the flow through the outlet hole 8 can be varied with respect to each other, thus achieving varying mixing rates.

The valve 14 is secured by a locking plate 19 and sealed by a washer 15. A knob 18 on the outside enables the valve to be turned to different positions.

By sealing the outlet hole 8 (when turned to a certain position) the valve 14 enables the chamber 12 to be filled with liquid fertilizer, detergent, concentrated weedicide or pesticide, etc., without the concentrated liquid escaping through the outlet hole 8 and into the hose. When the inner chammber 7 is filled and the screw-on cap 6 replaced, the water tap is turned on and the mixing valve 14 turned to the desired position. Only then does the concentrated liquid begin to mix with the water passing through the path 4.

In operation, the main flow of water passes through the path 4, but because of the restricted cross-section near the top (or because of the setting of the regulator), there is a flow of water through the hole 5 in the path into the inner chamber 7. As the pressure chamber fills a strong solution of fertilizer is created. When the pressure chamber is full, the solution begins to be steadily forced out through the hole 8 in the bottom of the chamber where it mixes with the water passing through the path 4.

At the water inlet 1 there is a spring-loaded valve 3 which opens under the pressure of the incoming water and closes when the flow stops. This is intended to prevent the return of fertilizer solution into the tap and contamination of the water supply, e.g. in situations where the flow is stopped at the hose nozzle and the tap remains open.

The chamber 12 may be fitted with a floating ball valve or the like for the emission of air.

When attached directly to a tap the device may incorporate a flexible collar to prevent the device being damaged if accidentally knocked.

Industrial Applicability

Dispensing fertilisers, weedicides, pesticides, etc., through high pressure watering system.

Claims

1. A device for distributing soluble additives in a pressure watering system, said device comprising an outer pressure chamber (12) and an inner permeable chamber (7) for holding the additives, two paths for water flow between an inlet (1) and an outlet (9), one path (4) being a direct main flow path and the other path being into and through the inner chamber and out of the outer chamber, wherein the path through the inner chamber comprises an inlet hole (5) between the upstream end of the main flow path (4) and the inside of the inner chamber (7) and an outlet hold (8) between the inside of the outer chamber (12) and the downstream end of the main flow path (4), characterised by a single regulating means situated near the outlet hole (8) for adjusting both the flow through the main flow path (4) and the flow through said outlet hole and also for adjusting the back pressure in the main flow path, said regulating means comprising a manually operated valve (14) having a passage (21) which can connect the main flow path (4) to the outlet (9) and an abutment (20) which can close the outlet (8) of the path through the inner chamber, the passage (21) and the abutment (20) being so relatively positioned that actuation of the valve (14) controls the relative flow rates through the main path (4) and the outlet (8) progressively between a position where the outlet (8) is blocked and the main flow path (4) is unobstructed and a position where the outlet (8) is open and said main path (4) is blocked.

2. A device as claimed in claim 1, characterised in that the manually operated valve (14) has a tapered conical body and the passage (21) extends from the narrow end thereof to an opening (16) in the side of the conical body and wherein the abutment (20) comprises a collar at the narrow end of the valve, the said collar (20) and said opening (16) being so positioned with respect to one another that when the opening (16) connects the main path (4) to the outlet, the collar (20) closes the outlet (8), and opposite closing and opening effects occur as the valve is rotated.

3. A device as claimed in claim 1 or 2, characterised in that the main flow path (4) is between the inside of the outer chamber (12) and an impermeable wall part thereof outside the inner chamber (7) and the other path is through the inner chamber and out through the permeable part thereof to entrain with the water flowing in the main flow path.

**Revendications**

1. Dispositif pour distribuer des additifs solubles dans un système d'arrosage sous pression, ledit dispositif comprenant une chambre sous pression extérieure (12 et une chambre perméable intérieure (7) pour contenir les additifs, deux chemins d'écoulement d'eau entre une entrée (1) et une sortie (9), l'un des chemins (4) étant un chemin d'écoulement principal direct et l'autre chemin entrant dans la chambre intérieure, traversant cette dernière et sortant par la chambre extérieure, le chemin qui traverse la chambre intérieure comprenant un orifice d'entrée (5) entre l'extrémité amont du chemin d'écoulement principal (4) et l'intérieur de la chambre intérieure (7) et un orifice de sortie (8) entre l'intérieur de la chambre extérieure (12) et l'extrémité aval du chemin d'écoulement principal (4), caractérisé par un unique moyen de régulation situé près de l'orifice de sortie (8) pour régler à la fois le fébit du chemin d'écoulement principal (4) et le débit dans ledit orifice de sortie ainsi que pour régler la contre-pression du chemin d'écoulement principal, ledit moyen de régulation comprenant une vanne à commande manuelle (14) ayant un passage (21) qui permet de relier le chemin d'écoulement principal (4) à la sortie (9) et une butée (20) qui permet de fermer la sortie (8) du chemin qui traverse la chambre intérieure, le passage (21) et la butée (20) ayant des positions relatives telles que le commande de la vanne (14) contrôle les débits relatifs du chemin principal (4) et de la sortie (8) progressivement entre une position où la sortie (8) est obturée et le chemin d'écoulement principal (4) libre et une position où la sortie (8) est ouverte et ledit chemin principal (4) est obturé.

2. Dispositif conforme à la revendication 1, caractérisé par le fait que la vanne à commande manuelle (14) a un corps conique et que le passage (21) part de l'extrémité étroite de ladite vanne pour rejoindre une ouverture (16) dans le côté du corps conique et dans lequel la butée (20) comprend un collier à l'extrémité étroite de la vanne, ledit collier (20) et ladite ouverture (16) étant placés l'un par rapport à l'autre de sorte que lorsque l'ouverture (16) relie le chemin principal (4) à la sortie, le collier (20) ferme la sortie (8) et qu'il se produise des effets de fermeture et d'ouverture opposés pendant la rotation de la vanne.

3. Dispositif conforme à la revendication 1 ou 2, caractérisé par le fait que le chemin d'écoulement principal (4) se trouve entre l'intérieur de la chambre extérieure (12 et une paroi perméable qui en fait partie à l'extérieur de la chambre intérieure (7) et que l'autre chemin passe dans la chambre intérieure et sort par la partie perméable de cette dernière pour se mélanger avec l'eau circule dans le chemin d'écoulement principal.

**Patentansprüche**

1. Vorrichtung zum Verteilen lösbarer Additive in einem Druck-Bewässerungssystem, mit einer äußeren Druckkammer (12) und einer inneren permeablen Kammer (7) zur Aufnahme der Additive, mit zwei Wasserfluß-Wegen zwischen einem Einlaß (1) und einem Auslaß (9), von denen ein Weg (4) eine direkter Hauptflußweg ist und der andere Weg in und durch die innere Kammer und aus der äußeren Kammer heraus verläuft, wobei der Weg durch die Innere Kammer ein Einlaßlock (5) zwischen dem stromaufwärts befindlichen Ende des Hauptflußweges (4) und der Innenseite der inneren Kammer (7) sowie ein Auslaßloch (8) zwischen der Innenseite der äußeren Kammer (12) und dem stromabwärts befindlichen Ende des Hauptflußweges (4) umfaßt, gekennzeichnet durch eine einzige, in der nahe des Auslaßloches (8) angeordnete Reguliereinrichtung zur Einstellung sowohl des Stromes durch den Hauptflußweg (14) als auch des Stromes durch das Auslaßloch (8) und auch zur Einstellung des Gegendruckes im Hauptflußweg, welche Reguliereinrichtung ein manuell betätigbares Ventil (14) umfaßt, das eine Kanal (21), welcher den Hauptflußweg (4) mit dem Auslaß (9) verbinden kann, sowie eine Schließfläche (20), aufweist, welche den Auslaß (8) des Weges durch die innere Kammer verschließen kann, wobei der Kanal (21) und die Schließflache (20) relativ zueinander so angeordnet sind, daß durch Betätigung des Ventils (14) die Strömungsraten durch den Hauptweg (4) und den Auslaß (8) relativ zueinander gesteuert werden mit allmählichem Übergang zwischen einer Stellung, in welcher der Auslaß (8) gesperrt und der Hauptflußweg (4) unbehindert ist, und einer Stellung, in welcher der Auslaß (8) geöffnet und der Hauptweg (4) gesperrt ist.

2. Vorrichtung nach Anspruch 1, dadurch gekennzeichnet, daß das manuell betätigte Ventil (14) einen konisch sich verjüngenden Körper aufweist und sich der Kanal (21) vom schmalen Ende des Körpers zu einer Öffnung (16) in der Seite des konischen Körpers erstreckt, und daß die Schließfläche (20) einen Hals am schmalen Ende des Ventils umfaßt, wobei der Hals (20) und die Öffnung (16) relativ zueinander so angeordnet sind, daß, wenn die Öffnung (16) den Hauptweg (4) mit dem Auslaß verbindet, der Hals (20) den Auslaß (8) verschließt, und daß beim Drehen des Ventils ein gegenläufiges Schließen und Öffnen erfolgt.

3. Vorrichtung nach Anspruch 1 oder 2, dadurch gekennzeichnet, daß sich der Hauptflußweg (4) zwischen der Innenseite der äußeren Kammer (12) und einem undurchlässigen Wandteil derselben außerhalb der inneren Kammer (7) befindet, und daß der andere Weg durch die innere Kammer und durch den permeablen Teil derselben aus dieser herausverläuft, um mit dem Wasser, daß im Hauptflußweg fließt, mitgenommen zu werden.

0 052 105

FIG. 1

FIG. 2

FIG. 3